# EUROPEAN PATENT SPECIFICATION

(11) **EP 4 193 698 B1**
(45) Date of publication and mention of the grant of the patent: **04.03.2026**
(21) Application number: 21723870.8
(22) Date of filing: 04.05.2021
(51) Int. Cl.: H04W 76/15, H04W 76/34, H04W 84/12, H04W 88/06, H04W 88/10, H04W 52/02

(54) **DEVICES AND METHODS FOR ENERGY EFFICIENT MULTI-LINK COMMUNICATION IN A WIRELESS NETWORK**
VORRICHTUNGEN UND VERFAHREN FÜR ENERGIEEFFIZIENTE MULTILINK-KOMMUNIKATION IN EINEM DRAHTLOSEN NETZWERK
DISPOSITIFS ET PROCÉDÉS DE COMMUNICATIONS MULTI-LIAISONS À FAIBLE CONSOMMATION D'ÉNERGIE DANS UN RÉSEAU SANS FIL

(43) Date of publication of application: 14.06.2023
(60) Divisional application: 26152814.5
(73) Proprietor: Huawei Technologies Co., Ltd., Shenzhen, Guangdong 518129 (CN)
(72) Inventor: SHILO, Shimon, 80992 Munich (DE); WEITZMAN, Avi, 80992 Munich (DE); EPSTEIN, Avner, 80992 Munich (DE); KLEIN, Arik, 80992 Munich (DE)
(74) Representative: Isarpatent
(86) International application number: PCT/EP2021/061618
(87) International publication number: WO 2022/233395

(56) References cited:
- US-A1- 2020 163 141
- US-A1- 2021 007 168
- US-A1- 2021 037 583
- ABHISHEK PATIL (QUALCOMM): "MLO: Link Management (follow-up)", vol. 802.11 EHT; 802.11be, no. 3, 16 January 2020 (2020-01-16), pages 1 - 16, XP068165461, Retrieved from the Internet <URL:https://mentor.ieee.org/802.11/dcn/19/11-19-1904-03-00be-mlo-link-management-follow-up.pptx> [retrieved on 20200116]
- YONGGANG FANG (ZTE TX): "multi-link power saving operation", vol. 802.11 EHT; 802.11be, no. 1, 21 May 2020 (2020-05-21), pages 1 - 12, XP068168020, Retrieved from the Internet <URL:https://mentor.ieee.org/802.11/dcn/20/11-20-0070-01-00be-multi-link-power-saving-operation.pptx> [retrieved on 20200521]
- MINYOUNG PARK (INTEL CORP): "multi-link power save - link bitmap", vol. 802.11 EHT; 802.11be, no. 1, 21 April 2020 (2020-04-21), pages 1 - 10, XP068167559, Retrieved from the Internet <URL:https://mentor.ieee.org/802.11/dcn/20/11-20-0085-01-00be-multi-link-power-save-link-bitmap.pptx> [retrieved on 20200421]
- LAURENT CARIOU (INTEL): "multi-link power save state after enablement", vol. 802.11 EHT; 802.11be, 16 March 2020 (2020-03-16), pages 1 - 5, XP068167105, Retrieved from the Internet <URL:https://mentor.ieee.org/802.11/dcn/20/11-20-0391-00-00be-multi-link-power-save-state-after-enablement.pptx> [retrieved on 20200316]

## Description

### TECHNICAL FIELD

The present invention relates to wireless communications. More specifically, the present invention relates to devices and methods for energy efficient wireless communication in an IEEE-802.11-based wireless communication network.

### BACKGROUND

IEEE-802.11-based WLANs have become popular at an unprecedented rate. WLANs support a variety of data transfer modes including (but not only) file transfer, emails, web browsing and real-time applications such as audio and video applications. For efficiently supporting high throughputs, a new feature referred to as "Multi-Link" has been introduced for IEEE-802.11be. "Multi-Link" is based on the idea to setup and use more than one link between a wireless access point (AP) and one or more non-AP stations for frame exchange.

However, increasing the number of links between the multi-link wireless AP and the one or more non-AP stations, results in an increased power consumption, in particular of the multi-link wireless AP, which may operate links with several multi-link wireless non-AP stations. One reason for the increased power consumption is that the multi-link wireless AP will require, for instance, an increased number of power amplifiers for supporting the communication via the larger number of links.

Power saving is an important issue for wireless devices in the consumer electronics market as well as in the enterprise market. In the consumer electronics market, a "Power Consumption level" certification may become de-facto a must for every product. For instance, as of the year 2022 an AP power save function will be mandatory in all products in the European market. Any new equipment sold in EU that must comply with a specific total power consumption regulation when the equipment is not in use.

In the enterprise market, an AP often uses POE (Power over Ethernet) which limits the power consumption of the AP between 15W and 75W (depending on the cable and POE type). This limit strongly constrains the hardware of the enterprise AP, such as the number of power amplifiers per AP, number of radios, modems and antenna ports per radio.

US 2021/037583 A1 discloses an apparatus (e.g., a station (STA) in a wireless local area network (WLAN)), which receives, from an access point (AP), a frame comprising a multi-link configuration information element (IE) that indicates one or more enabled links as a subset of one or more supported links for a traffic identifier (TID).

US 2021/007168 A1 discloses systems, methods, and apparatus, including computer programs encoded on computer-readable media, for signaling between an access point (AP) multi-link device (MLD) and a non-AP MLD that support multi-link communication in a wireless local area network (WLAN).

US 2020/163141 A1 discloses a method and an apparatus for simultaneous transmission and reception of data wirelessly using different wireless bands.

Document "MLO: Link Management (follow-up)" by ABHISHEK PATIL from Qualcomm, IEEE DRAFT, 11-19-1904-03-00BE-MLO-LINK-MANAGEMENT-FOLLOW-UP, IEEE-SA MENTOR, PISCATAWAY, NJ USA, vol. 802.11 EHT, 802.11be, no. 3, 16 January 2020 (2020-01-16), pages 1-16, XP068165461, discloses link management of multi-link operation.

Document "multi-link power saving operation" by YONGGANG FANG from ZTE TX, IEEE DRAFT, 11-20-0070-01-00BE-MULTI-LINK-POWER-SAV|NG-OPERATION, IEEE-SA MENTOR, PISCATAWAY, NJ USA, vol. 802.11 EHT, 802.11be, no. 1, 21 May 2020 (2020-05-21), pages 1-12, XP068168020, discloses an issue of power consumption in multi-link operation.

Document "multi-link power save - link bitmap" by MINYOUNG PARK from Intel Corp, IEEE DRAFT, 11-20-0085-01-00BE-MULTI-LINK-POWER-SAVE-L|NK-BITMAP, IEEE-SA MENTOR, PISCATAWAY, NJ USA, vol. 802.11 EHT, 802.11be, no. 1, 21 April 2020 (2020-04-21), pages 1-10, XP068167559, discloses a method to extend legacy power save operations to multi-link operation for 802.11be.

Document "multi-link power save state after enablement" by LAURENT CARIOU from Intel, IEEE DRAFT, 11-20-0391 -00-00BE-MULTI-LINK-POWER-SAVE-STATE-AFTER-ENABLEMENT, IEEE-SA MENTOR, PISCATAWAY, NJ USA, vol. 802.11 EHT, 802.11be, 16 March 2020 (2020-03-16), pages 1-5, XP068167105, discloses the initial power save state of the STAs on each link, right after the multi-link setup exchange.

### SUMMARY

It is an objective of the present disclosure to provide devices and methods for a more energy efficient wireless communication in an IEEE-802.11-based wireless communication network.

The foregoing and other objectives are achieved by the subject matter of the independent claims. Further implementation forms are apparent from the dependent claims.

The plurality of frames includes management frames, control frames and data frames.

The management frame is a link disable notification management frame. The link disable notification management frame comprises information, e.g. one or more information elements and fields, for the at least one of the plurality of multi-link wireless non-AP stations for identifying at least the first setup link of the plurality of setup links to be temporarily disabled by the multi-link wireless AP.

Moreover, the processing circuitry is configured to, in response to sending the link disable notification management frame, temporarily disable at least the first setup link, i.e. block exchange of further frames via at least the first setup link for reducing a power required to operate at least the first setup link. The multi-link wireless non-AP station may be kept associated with the multi-link wireless AP using a second setup link of the plurality of setup links between the multi-link wireless AP and the multi-link wireless non-AP station, while the first setup link is disabled.

Thus, advantageously a more energy efficient multi-link wireless AP is provided due to its capability to suspend the entire traffic activity on any of its enabled links (i.e. on both DL and UL directions), while keeping its operation with the associated multi-link wireless non-AP station(s) on other enabled links. This disabling link operation may not be limited to a fixed predefined time interval, but usually for a limited time interval.

In a possible implementation form, the plurality of setup links comprises at least one disabled setup link and wherein the communication interface is further configured to send a further management frame (referred herein to as "link enable notification management frame") to at least one of the plurality of multi-link wireless non-AP stations. The further, i.e. the link enable notification management frame comprises information, e.g. one or more information elements and fields, for the at least one of the plurality of multi-link wireless non-AP stations for identifying the at least one disabled link to be enabled by the multi-link wireless AP. The processing circuitry of the multi-link wireless AP is further configured, in response to sending the further management frame, to (re)allow the frame exchange on the at least one enabled link.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 shows a wireless communication system including a multi-link wireless AP according to an embodiment and a plurality of multi-link wireless non-AP stations according to an embodiment;
Fig. 2 shows a multi-link wireless AP according to an embodiment in communication with a multi-link wireless non-AP station according to an embodiment;
Fig. 3 shows a flow diagram illustrating steps of a method of operating a multi-link wireless AP according to an embodiment; and
Fig. 4 shows a flow diagram illustrating steps of a method of operating a multi-link wireless non-AP station according to an embodiment.

In the following, identical reference signs refer to identical features.

### DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims. For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise. In the following different embodiments of wireless devices, in particular wireless devices in accordance with the family of IEEE 802.11 WLAN standards will be described making use of one or more of the following abbreviations:
- DL: Downlink
- UL: Uplink
- BSS: Basic Serving Set
- AP: Access Point
- CSA: Channel Switch Announcement
- DFS: Dynamic Frequency Selection
- PHY: Physical Layer
- MAC: Medium Access Control
- ML: Multi Link
- MLD: Multi Link Device
- MSDU: MAC Service Data Unit
- MPDU: MAC Protocol Data Unit
- PPDU: PHY Protocol Data Unit
- POE: Power Over Ethernet
- STA: Station (in general, can be either an AP STA or a non-AP STA)
- OFDMA: Orthogonal Frequency Division Multiple Access
- TDMA: Time Division Multiple Access
- TID: Traffic Identifier; Any of the identifiers usable by higher layer entities to distinguish medium access control (MAC) service data units (MSDUs) to MAC entities that support quality of service (QoS) within the MAC data service
- TXOP: Transmit Opportunity
- BA: Block-ACK - in 802.11, typically a receiver is expected to respond to a data transmission by responding with an ACK; if multiple frames are transmitted within a single PPDU, each has to be acknowledged

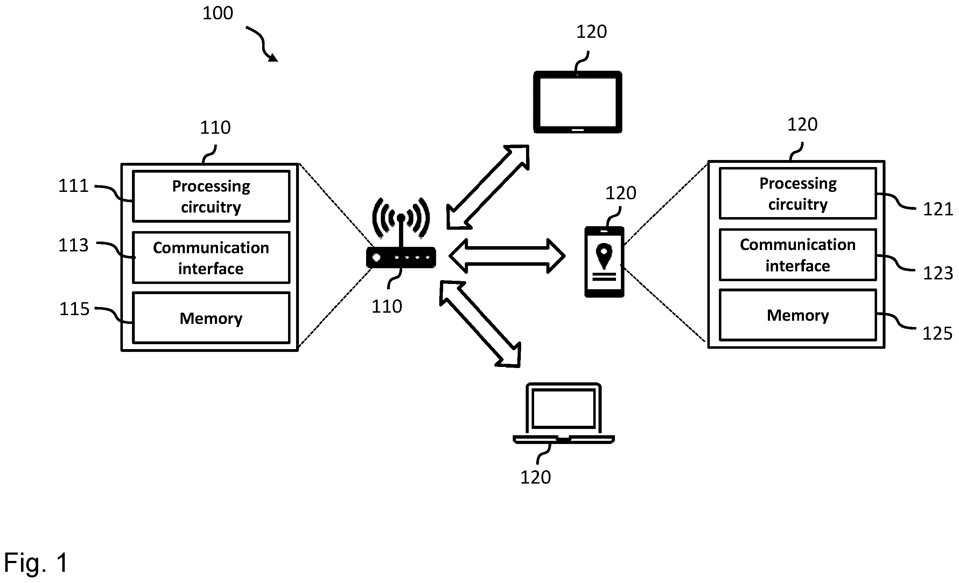

Figure 1 shows a wireless communication system 100 including a multi-link wireless AP 110 according to an embodiment and a plurality of multi-link wireless non-AP stations 120 according to an embodiment. As will be described in more detail in the following, the multi-link wireless AP 110 is configured to exchange a plurality of frames, including management frames, control frames and data frames, via a plurality of setup links with the plurality of multi-link wireless non-AP stations 120 in the wireless communication network 100. In an embodiment, the multi-link wireless AP 110 and the plurality of multi-link wireless non-AP stations 120 comply with one or more of the requirements defined by the family of IEEE 802.11 WLAN standards. The plurality of setup links between the multi-link wireless AP 110 and the plurality of multi-link wireless non-AP stations 120 may have been setup by means of a preceding setup procedure.

As illustrated in figure 1, the multi-link wireless AP 110 comprises a processing circuitry 111 for processing data and a communication interface 113 for transmitting and receiving frames via the plurality of setup links. As will be appreciated, the communication interface 113 may comprise, for instance, one or more antennas for wireless communication. The processing circuitry 111 may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The multi-link wireless AP 110 may further comprise a non-volatile memory 115, e.g. a Flash memory 115, configured to store data and executable program code which, when executed by the processing circuitry 111, causes the multi-link wireless AP 110 to perform the functions and operations described herein.

Likewise, the multi-link wireless non-AP station 120 comprises a processing circuitry 121 for processing data and a communication interface 123 for receiving and transmitting frames via the one or more setup links from the multi-link wireless AP 110. In an embodiment, the communication interface 123 may comprise one or more antennas for wireless communication. The processing entity 121 may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The multi-link wireless non-AP station 120 may further comprise a non-volatile memory 125, e.g. a Flash memory 125, configured to store data and executable program code which, when executed by the processing circuitry 121, causes the multi-link wireless non-AP station 120 to perform the functions and operations described herein.

The communication interface 113 of the multi-link wireless AP 110 is configured to send a management frame (herein referred to as link disable notification management frame) to one or more of the multi-link wireless non-AP stations 120 that operate on the same link of the plurality of setup links (which herein is also referred to as the "first setup link" of the plurality of setup links in order to distinguish this setup link from the other setup links). As will be described in more detail in the following, the link disable notification management frame sent to the one or more multi-link wireless non-AP stations 120 comprises information, e.g. one or more information elements or information fields, for identifying the first setup link (as well as possibly other setup links) to be temporarily disabled by the multi-link wireless AP 110. In other words, the processing circuitry 121 of each multi-link wireless non-AP station 120 receiving the link disable notification management frame from the multi-link wireless AP 110 (that is an intended recipient of the frame) is configured to extract, i.e. parse this information from the link disable notification management frame for identifying the first setup link (as well as possibly other setup links) to be temporarily disabled by the multi-link wireless AP 110.

The processing circuitry 111 of the multi-link wireless AP 110 is further configured to, in response to sending the link disable notification management frame to the one or more multi-link wireless non-AP stations 120, temporarily disable the first setup link (as well as possibly other setup links identified by the link disable notification management frame) by blocking the exchange of any further frames via the first setup link (as well as possibly other setup links identified by the link disable notification management frame). Likewise, the processing circuitry 121 of each multi-link wireless non-AP station 120 receiving the link disable notification management frame from the multi-link wireless AP 110 is configured to disable, i.e. block exchange of any further frames via the first setup link (as well as possibly other setup links identified by the information extracted from the link disable notification management frame).

However, the one or more multi-link wireless non-AP stations 120 will be kept associated with the multi-link wireless AP 110 using a further, i.e. second enabled setup link of the plurality of setup links while the first setup link is disabled. In other words, while the first setup link is in the disabled state, the multi-link wireless AP 110 may still exchange frames with the one or more multi-link wireless non-AP stations 120 using the still enabled at least second setup link. As will be appreciated, operating the first setup link (as well as possibly other setup links identified by the link disable notification management frame) in the disabled state will result in a reduced power consumption of the multi-link wireless AP 110 as well as the one or more multi-link wireless non-AP stations 120.

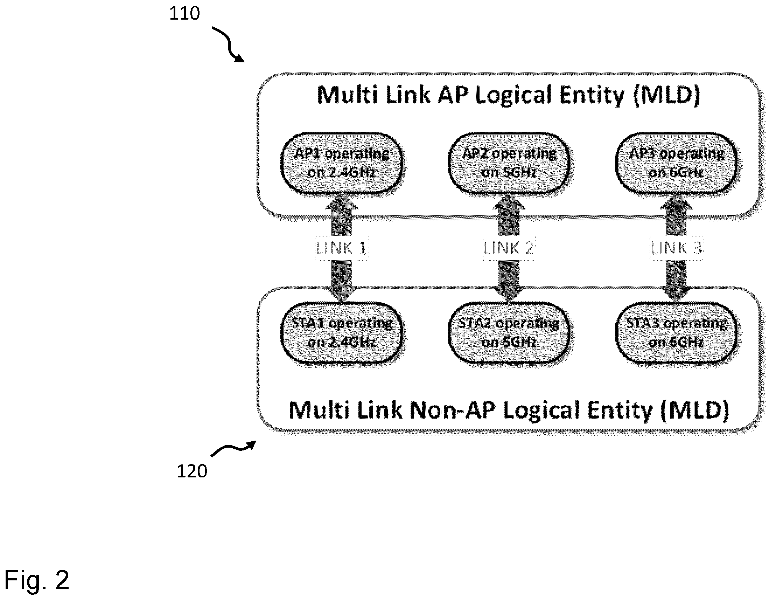

Figure 2 shows the multi-link wireless AP 110 according to an embodiment in communication with the multi-link wireless non-AP station 120 according to an embodiment. In the embodiment shown in figure 2, the multi-link wireless AP 110 includes three "APs" that are affiliated therewith (referred to as AP1, AP2, AP3 in figure 2). By way of example, the multi-link wireless non-AP station 120 includes three "STAs" that are affiliated therewith (referred to as STA1, STA2, STA3 in figure 2). The exemplary embodiment shown in figure 2 shows the connection between the multi-link wireless AP 110 (also referred to as "AP MLD") and the multi-link wireless non-AP station 120 (also referred to as "non-AP MLD") via three setup links (referred to as Link1, Link 2, Link 3 in figure 2). By way of example, Link 1 operates on the 2.4 GHz band, Link 2 operates on the 5 GHz band and Link 3 operates on the 6 GHz band.

In an embodiment, the communication interface 113 of the multi-link wireless AP 110 is configured to send the link disable notification management frame to the one or more multi-link wireless non-AP stations 120 operating on the first setup link via the first setup link itself to be disabled by the multi-link wireless AP 110. In a further embodiment, one or more further enabled setup links may be used for sending the link disable notification management frame to the one or more multi-link wireless non-AP stations 120 (provided the one or more multi-link wireless non-AP stations 120 are also operating on these one or more further enabled setup links).

In an embodiment, the link disable notification management frame may be a unicast management frame that is sent to a single individually addressed multi-link wireless non-AP station 120 that is operating on this link or a broadcast management frame that is sent to a group or all of the multi-link wireless non-AP stations 120 that are operating on this link.

In case the disable notification management frame is a unicast management frame, the communication interface 123 of the multi-link wireless non-AP station 120 is further configured to send, in response to receiving the individually addressed link disable notification management frame from the multi-link wireless AP 110, an acknowledgment frame, e.g. an ACK frame or a Block ACK frame, to the multi-link wireless AP 110. In this embodiment, the processing circuitry 111 of the multi-link wireless AP 110 may be configured to temporarily disable the first setup link, i.e. block exchange of further frames via the first setup link (as well as possibly other setup links identified by the link disable notification management frame), in response to sending the unicast link disable notification management frame to the individually addressed multi-link wireless non-AP station 120 and receiving the acknowledgement frame from the multi-link wireless non-AP station 120.

In case the disable notification management frame is a broadcast management frame, the processing circuitry 111 of the multi-link wireless AP 110 is configured to temporarily disable the first setup link (as well as possibly other setup links identified by the link disable notification management frame), in response to sending the broadcast link disable notification management frame to all of the plurality of multi-link wireless non-AP stations 120 operating on the first setup link.

In the following further embodiments of the multi-link wireless AP 110 and the multi-link wireless non-AP station(s) 120 will be described in more detail that make advantageous use of a mechanism for mapping transmission identifiers (TIDs) corresponding to data frames to one or more of the plurality of setup links. More specifically, in an embodiment, each data frame comprises a respective TID to which it corresponds and the processing circuitry 111 of the multi-link wireless AP 110 is configured to map individually each TID to one or more of the plurality of setup links for each of the plurality of multi-link wireless non-AP stations 120. In other words, the multi-link wireless AP 110 may implement a different TID-to-link mapping for each of the plurality of multi-link wireless non-AP stations 120. Based on the TID-to-link mapping defined for each of the plurality of multi-link wireless non-AP stations 120, the communication interface 113 of the multi-link wireless AP 110 is configured to send a respective data frame, in particular MSDU, depending on the TID of the data frame, via the one or more setup links the TID is mapped to.

In an embodiment, the link disable notification management frame comprises for one or more of the plurality of TIDs a respective bitmap defining the one or more of the plurality of setup links to which each TID is mapped to (for the at least one of the plurality of multi-link wireless non-AP stations 120). In an embodiment, the bitmaps defining the one or more of the plurality of setup links to which each TID is mapped to are valid until the communication interface 113 of the multi-link wireless AP 110 sends a further link disable notification management frame (or a further link enable notification management frame) to the one or more multi-link wireless non-AP stations 120.

In an embodiment, the plurality of bitmaps included in the link disable notification management frame may define for the first setup link (as well as possibly other setup links of the plurality of links) to be disabled by the multi-link wireless AP 110 that none of the plurality of TIDs is mapped to the first setup link (as well as possibly other setup links of the plurality of links) to be disabled by the multi-link wireless AP 110. In an embodiment, the plurality of TIDs may comprise up to 8 TIDs, wherein the bitmap for each TID comprises 2 octets, which allows mapping the up to 8 TIDs to up to 16 setup links. In an embodiment, for disabling a link, all of the bitmaps pertaining to a specific non-AP multi-link station contain a zero bit at a position corresponding to the setup link to be disabled.

In an embodiment, the link disable notification management frame may further comprise a direction field for defining whether the TID-to-link mapping defined by the one or more bitmaps is for a downlink, DL, communication direction or an uplink, UL, communication direction between the multi-link wireless AP 110 and the plurality of multi-link wireless non-AP stations 120. In an embodiment, the link disable notification management frame may further comprise a TID presence indicator field for identifying those TIDs for which the one or more bitmaps define the mapping of the respective TID to one or more of the plurality of setup links.

In an embodiment, the link disable notification management frame may comprise a plurality of bitmaps for each of the multi-link wireless non-AP stations 120, wherein for each of the multi-link wireless non-AP stations 120 the plurality bitmaps define for one or more of the plurality of TIDs the one or more of the plurality of setup links to which the TID is mapped to for the respective multi-link wireless non-AP station 120. For instance, in an embodiment, the link disable notification management frame may comprise tuples or groups consistent of a respective plurality of bitmaps (defining the TID-to-link mapping) and an identifier, such as an AID, of the respective multi-link wireless non-AP station 120. In a further embodiment, the link disable notification management frame may comprise only a single set of bitmaps defining the TID-to-link mapping for all of the plurality of multi-link wireless non-AP stations 120 that are operating on the same set of setup links.

Thus, as will be appreciated, embodiments disclosed herein make "indirect" advantageous use of a TID-to-link mapping mechanism by mapping a specific setup link to none of the TIDs and thereby essentially disabling the link for reducing the power consumption in particular of the multi-link wireless AP 110.

In an embodiment, the plurality of setup links comprises at least one disabled setup link, such as a previously enabled setup link that has been disabled by the multi-link wireless AP 110 as described above. For such an embodiment, the communication interface 113 of the multi-link wireless AP 110 is configured to send a further management frame (herein referred to as link enable notification) management frame to one or more of the plurality of multi-link wireless non-AP stations 120. The link enable notification management frame comprises information, e.g. one or more information elements or information fields, for the one or more multi-link wireless non-AP stations 120 for identifying the at least one disabled setup link to be immediately enabled by the multi-link wireless AP. The processing circuitry 121 of the one or more multi-link wireless non-AP stations 120 is configured to extract, i.e. parse this information from the link enable notification management frame and to identify the at least one disabled setup link to be enabled by the multi-link wireless AP 110 on the basis thereof. In response to sending the link enable notification management frame to the one or more multi-link wireless non-AP stations 120, the processing circuitry 111 of the multi-link wireless AP 110 is further configured to enable the at least one disabled setup link.

In an embodiment, the link enable notification management frame may have the same format and structure as the link disable notification management frame. Moreover, the link enable notification management frame may comprise one or more of the information elements of the link disable notification management frame described above, for instance, the plurality of bitmaps for defining the TID-to-link mapping(s). In an embodiment, the link enable notification management frame may comprise a default mapping indication for informing the one or more multi-link wireless non-AP stations 120 about a default mapping of the plurality of TIDs to the plurality of setup links, wherein, if the default mapping indication is set, the default mapping defines that all of the plurality of TIDs are mapped to all of the plurality of setup links, i.e. that all setup links are enabled.

In an embodiment, the processing circuitry 121 of the multi-link wireless non-AP station 120 is configured to identify the first setup link (as well as possibly other setup links) to be temporarily disabled by the multi-link wireless AP 110 and/or the at least one disabled setup link to be enabled by the multi-link wireless AP 110 on the basis of a most recent link disable/enable management frame and one or more previously received link disable/enable management frames. In an embodiment, the multi-link wireless non-AP station 120 may maintain the TID-to-link mappings for all TIDs in its memory 125 and update these TID-to-link mappings based on the most recent received link disable/enable management frame. For instance, the most recent received link disable/enable management frame may contain TID-to-link mappings for only two out of eight TIDs, e.g., for TID 1 and TID 3 (as also indicated in the TID presence indicator field already mentioned above). In that case the processing circuitry 121 of the multi-link wireless non-AP station 120 may update the TID-to-link mappings for TID 1 and TID 3 in the memory 125 and maintain the TID-to-link mappings for the other TIDs (based on one or more previously received link disable/enable management frames). In case the multi-link wireless non-AP station 120 has not received any information about the TID-to-link mappings for one or more TIDs it shall apply the default TID-to-link mapping for these TIDs.

The embodiments described above for enabling a disabled setup link can be advantageously used for improving dynamic frequency selection (DFS). As will be appreciated, DFS is mainly used in the 802.11 specifications for radar detection on 5 GHz (UNII-2 band) channels. It is currently prohibited to use channels on 5 GHz if radar is detected on these channels. The current standardized approach is to switch a channel (only solution in single link case). The radar detection on a specific channel, initiates the evacuation of this channel (using CSA procedure) in the BSS, where this procedure is relatively long (3 to 10 beacon periods).

However, embodiments disclosed herein may provide for a very short recovery after radar detection on 5 GHz channels by setting up several links on "DFS channels" while using only a subset of these setup links. The other non-used links are disabled and used only as "backup links" for the case that radar is detected on any of the operating enabled links. This will assist the fast transition of the one or more multi-link wireless non-AP stations 120 to the "clean" backup links while the "DFS channels" become disabled during the time that radar is being detected.

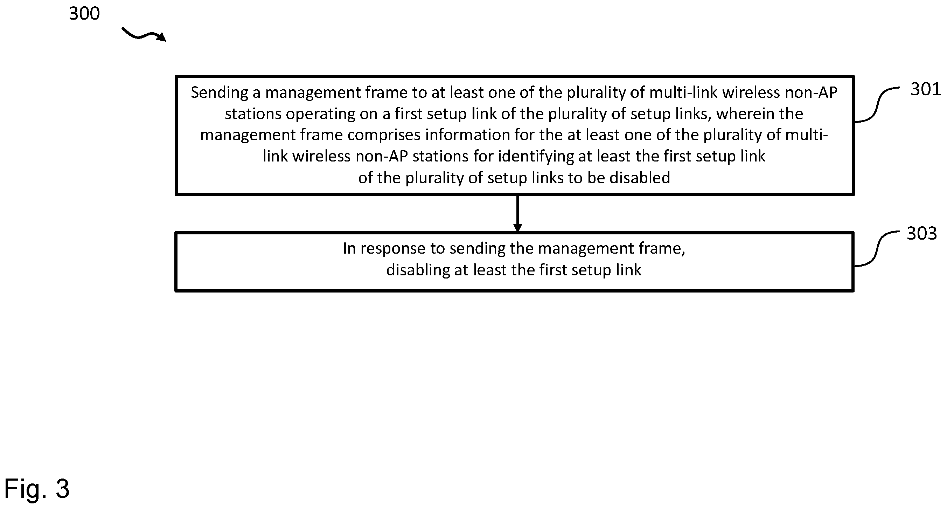

Figure 3 shows a flow diagram illustrating steps of a method 300 of operating the multi-link wireless AP 110 according to an embodiment.

The method 300 comprises a first step 301 of sending a link disable notification management frame to one or more of the plurality of multi-link wireless non-AP stations 120 operating on the first setup link of the plurality of setup links, wherein the link disable notification management frame comprises information, e.g. one or more information elements and fields, for the one or more multi-link wireless non-AP stations 120 for identifying the first setup link (and possibly other setup links of the plurality of setup links) to be temporarily disabled by the multi-link wireless AP 110.

Furthermore, in response to sending the link disable notification management frame, the method 300 comprises a further step 303 of temporarily disabling the first setup link, i.e. blocking exchange of further frames via the first setup link (and possibly other setup links identified by the link disable notification management frame), wherein the one or more multi-link wireless non-AP stations 120 are kept associated using one or more second setup links of the plurality of setup links while the first setup link is disabled.

In an embodiment, the link disable notification management frame is a broadcast management frame and the step 303 of disabling at least the first setup link comprises immediately disabling at least the first setup link, in response to sending the broadcast management frame to the one or more multi-link wireless non-AP stations 120 operating on the first setup link.

In a further embodiment the link disable notification management frame may be a unicast management frame, wherein the method 300 further comprises the step of receiving an acknowledgement frame from the multi-link wireless non-AP station 120 individually addressed by the unicast management frame. In this case the step 303 of disabling at least the first setup link comprises disabling at least the first setup link, in response to sending the unicast management frame and receiving the acknowledgement frame from the multi-link wireless non-AP station 120 individually addressed by the unicast management frame.

In an embodiment, where the plurality of setup links comprises at least one disabled setup link, the method 300 further comprises a step of sending a further management frame (referred to as link enable notification management frame) to one or more of the plurality of multi-link wireless non-AP stations 120, wherein the link enable notification management frame comprises information, e.g. one or more information elements or fields, for the one or more multi-link wireless non-AP stations 120 for identifying the at least one disabled setup link to be immediately enabled by the multi-link wireless AP 110.

In an embodiment, the link enable notification management frame is a broadcast management frame and the step of enabling the at least one disabled setup link comprises immediately enabling the at least one disabled setup link, in response to sending the link enable notification management frame.

In a further embodiment, the management frame may be a unicast management frame and the method 300 further comprises a step of receiving a further acknowledgement frame from the multi-link wireless non-AP station 120 individually addressed by the unicast management frame. In this case the step of enabling the at least one disabled setup link comprises the step of enabling the at least one disabled setup link, in response to sending the unicast management frame and receiving the further acknowledgement frame from the multi-link wireless non-AP station 120 individually addressed by the unicast management frame.

As the method 300 can be implemented by the multi-link wireless AP 110, further features of the method 300 result directly from the functionality of the multi-link wireless AP 110 and its different embodiments described above and below.

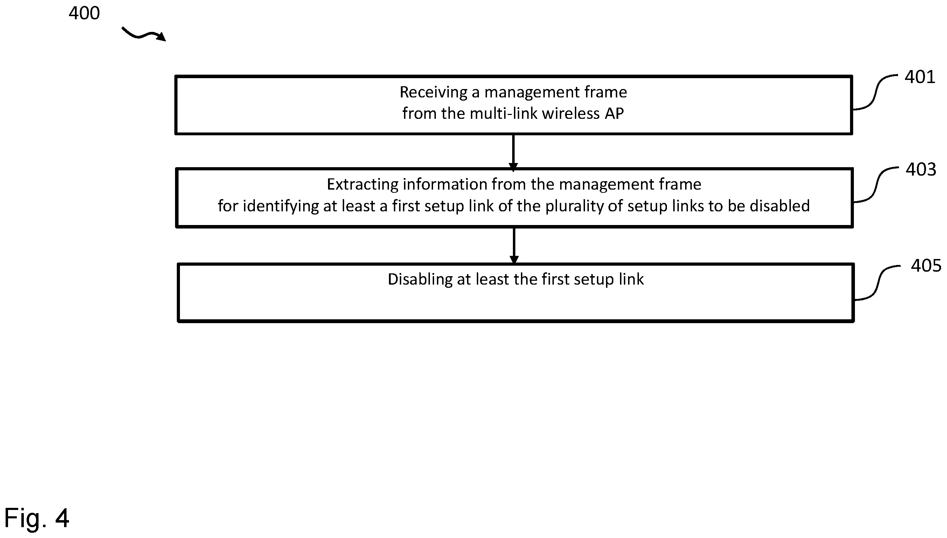

Figure 4 shows a flow diagram illustrating steps of a method 400 of operating the multi-link wireless non-AP station 120 according to an embodiment.

The method 400 comprises a first step 401 of receiving a link disable notification management frame from the multi-link wireless AP 110. Moreover, the method 400 comprises a step 403 of extracting, i.e. parsing information, e.g. one or more information elements or fields, from the link disable notification management frame for identifying a first setup link (and possibly further setup inks) of the plurality of setup links to be temporarily disabled by the multi-link wireless AP 110. The method 400 further comprises a step 405 of disabling, i.e. blocking exchange of further frames via the first setup link (and possibly other setup links identified by the link disable notification management frame).

In an embodiment, the link disable notification management frame is a broadcast management frame and the step 405 of disabling at least the first setup link comprises disabling at least the first setup link, in response to receiving the link disable notification management frame.

In a further embodiment, the link disable notification management frame is a unicast management frame and the method 400 further comprises a step of sending an acknowledgement frame to the multi-link wireless AP 110. In this case the step 405 of disabling at least the first setup link comprises disabling at least the first setup link, in response to receiving the individually addressed link disable notification management frame and sending the acknowledgement frame to the multi-link wireless AP 110.

In an embodiment, where the plurality of setup links comprises at least one disabled setup link, the method 400 further comprises a step of receiving a link enable notification management frame from the multi-link wireless AP 110 and a step of extracting, i.e. parsing further information, e.g. one or more further information elements or fields, from the link enable notification management frame for identifying the at least one disabled setup link to be enabled by the multi-link wireless AP 110. Moreover, the method 400 comprises enabling, i.e. allowing exchange of further frames via the at least one disabled setup link identified by the further information extracted from the link enable notification management frame.

In an embodiment, the link enable notification management frame is a broadcast management frame and the step of enabling the at least one disabled setup link comprises enabling the at least one disabled setup link, in response to receiving the link enable notification management frame.

In a further embodiment, the link enable notification management frame is a unicast management frame and the method 400 further comprises sending a further acknowledgement frame to the multi-link wireless AP 110. In this case the step of enabling the at least one disabled setup link comprises enabling the at least one disabled setup link, in response to receiving the individually addressed link enable notification management frame and sending the further acknowledgement frame to the multi-link wireless AP 110.

As the method 400 can be implemented by the multi-link wireless non-AP station 120, further features of the method 400 result directly from the functionality of the multi-link wireless non-AP station 120 and its different embodiments described above and below.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners, without departing from the scope of the invention as defined by the appended claims.

For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A multi-link wireless access point, AP, (110) configured to exchange a plurality of frames via a plurality of setup links with a plurality of multi-link wireless non-AP stations (120) in a wireless communication network (100), wherein the multi-link wireless AP (110) comprises:
a communication interface (113) configured to send a management frame to at least one of the plurality of multi-link wireless non-AP stations (120) operating on a first setup link of the plurality of setup links,
wherein the management frame comprises information for the at least one of the plurality of multi-link wireless non-AP stations (120) for identifying at least the first setup link of the plurality of setup links to be disabled; and
a processing circuitry (111) configured to, in response to sending the management frame, disable at least the first setup link,
**characterized in that** the communication interface (113) is configured to send the management frame to the at least one of the plurality of multi-link wireless non-AP stations (120) operating on the first setup link via the first setup link to be disabled by the multi-link wireless AP (110).

2. The multi-link wireless AP (110) of claim 1, wherein the plurality of setup links comprises at least one disabled setup link and wherein the communication interface (113) is further configured to send a further management frame to at least one of the plurality of multi-link wireless non-AP stations (120), wherein the further management frame comprises information for the at least one of the plurality of multi-link wireless non-AP stations (120) for identifying the at least one disabled setup link to be enabled, and wherein the processing circuitry (111) is further configured, in response to sending the further management frame, to enable the at least one disabled setup link.

3. The multi-link wireless AP (110) of claim 1 or 2, wherein the management frame is a unicast management frame sent to one of the plurality of multi-link wireless non-AP stations (120) and wherein the communication interface (113) is configured to receive an acknowledgment frame from the one multi-link wireless non-AP station (120), in response to sending the management frame to the one multi-link wireless non-AP station (120).

4. The multi-link wireless AP (110) of claim 1 or 2, wherein the management frame is a broadcast management frame and wherein the processing circuitry (111) is configured to disable at least the first setup link, in response to sending the management frame to all of the plurality of multi-link wireless non-AP stations (120) operating on the first setup link.

5. The multi-link wireless AP (110) of any one of the preceding claims, wherein the plurality of frames comprises a plurality of data frames and wherein each data frame comprises a corresponding transmission identifier, TID, to which it corresponds of a plurality of TIDs and wherein the processing circuitry (111) is configured to map each TID to one or more of the plurality of setup links.

6. A method (300) performed by
a multi-link wireless access point, AP, (110) configured to exchange a plurality of frames via a plurality of setup links with a plurality of multi-link wireless non-AP stations (120) in a wireless communication network (100), wherein the method (300) comprises:
sending (301) a management frame to at least one of the plurality of multi-link wireless non-AP stations (120) operating on a first setup link of the plurality of setup links, wherein the management frame comprises information for the at least one of the plurality of multi-link wireless non-AP stations (120) for identifying at least the first setup link of the plurality of setup links to be disabled; and
in response to sending the management frame, disabling (303) at least the first setup link,
**characterized in that** the management frame is sent to the at least one of the plurality of multi-link wireless non-AP stations (120) operating on the first setup link via the first setup link to be disabled by the multi-link wireless AP (110).

7. The method (300) of claim 6, wherein the management frame is a broadcast management frame and wherein disabling (303) at least the first setup link comprises immediately disabling at least the first setup link, in response to sending the broadcast management frame.

8. The method (300) of claim 6, wherein the management frame is a unicast management frame and wherein the method (300) further comprises receiving an acknowledgement frame, wherein disabling (303) at least the first setup link comprises disabling at least the first setup link, in response to sending the unicast management frame and receiving the acknowledgement frame.

9. The method (300) of any one of claims 6 to 8, wherein the plurality of setup links comprises at least one disabled setup link and wherein the method (300) further comprises sending a further management frame to at least one of the plurality of multi-link wireless non-AP stations (120), wherein the further management frame comprises information for the at least one of the plurality of multi-link wireless non-AP stations (120) for identifying the at least one disabled setup link to be enabled, and enabling the at least one disabled setup link, in response to sending the further management frame.

10. A multi-link wireless non-access point, non-AP, station (120) configured to exchange a plurality of frames via a plurality of setup links with a multi-link wireless AP (110) in a wireless communication network (100), wherein the multi-link wireless non-AP station (120) comprises:
a communication interface (123) to receive a management frame from the multi-link wireless AP (110); and
a processing circuitry (121) configured to extract information from the management frame for identifying at least a first setup link of the plurality of setup links to be disabled;
wherein the processing circuitry (121) is further configured to disable at least the first setup link,
**characterized in that** the communication interface (123) is configured to receive the management frame from the multi-link wireless AP (110) via the first setup link to be disabled.

11. The multi-link wireless non-AP station (120) of claim 10, wherein the management frame is a unicast frame and wherein the communication interface (123) is further configured to send, in response to receiving the individually addressed unicast management frame from the multi-link wireless AP (110), an acknowledgment frame to the multi-link wireless AP (110).

12. The multi-link wireless non-AP station (120) of claim 10 or 11, wherein the plurality of setup links comprises at least one disabled setup link and wherein the communication interface (123) is configured to receive a further management frame from the multi-link wireless AP (110), wherein the processing circuitry (121) is configured to extract further information from the further management frame for identifying the at least one disabled setup link to be enabled, wherein the processing circuitry (121) is further configured to enable the at least one disabled setup link.

13. The multi-link wireless non-AP station (120) of any one of claims 10 to 12, wherein the plurality of frames comprises a plurality of data frames and wherein each data frame comprises a corresponding transmission identifier, TID, of a plurality of TIDs and wherein the processing circuitry (121) is configured to map each TID to one or more of the plurality of setup links.

14. A method (400) performed by
a multi-link wireless non-access point, non-AP, station (120) configured to exchange a plurality of frames via a plurality of setup links with a multi-link wireless AP (110) in a wireless communication network (100), wherein the method (400) comprises:
receiving (401) a management frame from the multi-link wireless AP (110);
extracting (403) information from the management frame for identifying at least a first setup link of the plurality of setup links to be disabled; and
disabling (405) at least the first setup link,
**characterized in that** the management frame is received from the multi-link wireless AP (110) via the first setup link to be disabled.

15. The method (400) of claim 14, wherein the management frame is a broadcast management frame and wherein disabling (405) at least the first setup link comprises disabling at least the first setup link, in response to receiving the broadcast management frame.

16. The method (400) of claim 14, wherein the management frame is a unicast management frame and wherein the method (400) further comprises sending an acknowledgement frame to the multi-link wireless AP (110), wherein the step of disabling (405) at least the first setup link comprises disabling at least the first setup link, in response to receiving the unicast management frame and sending the acknowledgement frame to the multi-link wireless AP (110).

17. The method (400) of any one of claims 14 to 16, wherein the plurality of setup links comprises at least one disabled setup link and wherein the method (400) further comprises:
receiving a further management frame from the multi-link wireless AP (110);
extracting further information from the further management frame for identifying the at least one disabled setup link to be enabled; and
enabling the at least one disabled setup link.

18. A computer program product comprising a computer-readable storage medium for storing program code which when executed by a computer or a processor of a multi-link wireless access point, causes the multi-link wireless access point to perform the method (300) of any one of claims 6 to 9 or when executed by a computer or a processor of a multi-link wireless non-access point, causes the multi-link wireless non-access point to perform the method (400) of any one of claims 14 to 17.

## Patentansprüche

1. Drahtloser Multilink-Zugangspunkt, AP, (110), der dazu konfiguriert ist, eine Vielzahl von Rahmen über eine Vielzahl von Setup-Links mit einer Vielzahl von drahtlosen Multilink-Nicht-AP-Stationen (120) in einem drahtlosen Kommunikationsnetzwerk (100) auszutauschen, wobei der drahtlose Multilink-AP (110) Folgendes umfasst:
eine Kommunikationsschnittstelle (113), die dazu konfiguriert ist, einen Verwaltungsrahmen an mindestens eine der Vielzahl von drahtlosen Multilink-Nicht-AP-Stationen (120) zu senden, die auf einem ersten Setup-Link der Vielzahl von Setup-Links arbeitet,
wobei der Verwaltungsrahmen Informationen für die mindestens eine der Vielzahl von drahtlosen Multilink-Nicht-AP-Stationen (120) zum Identifizieren von mindestens dem ersten Setup-Link der Vielzahl von Setup-Links umfasst, die zu deaktivieren ist; und
eine Verarbeitungsschaltung (111), die dazu konfiguriert ist, mindestens den ersten Setup-Link als Reaktion auf das Senden des Verwaltungsrahmens zu deaktivieren,
**dadurch gekennzeichnet, dass** die Kommunikationsschnittstelle (113) dazu konfiguriert ist, den Verwaltungsrahmen an mindestens eine der Vielzahl von drahtlosen Multilink-Nicht-AP-Stationen (120), die auf dem ersten Setup-Link arbeitet, über den ersten Setup-Link zu senden, der durch den drahtlosen Multilink-AP (110) zu deaktivieren ist.

2. Drahtloser Multilink-AP (110) nach Anspruch 1, wobei die Vielzahl von Setup-Links mindestens einen deaktivierten Setup-Link umfasst und wobei die Kommunikationsschnittstelle (113) ferner dazu konfiguriert ist, einen weiteren Verwaltungsrahmen an mindestens eine der Vielzahl von drahtlosen Multilink-Nicht-AP-Stationen (120) zu senden, wobei der weitere Verwaltungsrahmen Informationen für die mindestens eine der Vielzahl von drahtlosen Multilink-Nicht-AP-Stationen (120) zum Identifizieren des mindestens einen deaktivierten Setup-Links, der zu aktivieren ist, umfasst und wobei die Verarbeitungsschaltung (111) ferner dazu konfiguriert ist, den mindestens einen deaktivierten Setup-Link als Reaktion auf das Senden des weiteren Verwaltungsrahmens zu aktivieren.

3. Drahtloser Multilink-AP (110) nach Anspruch 1 oder 2, wobei der Verwaltungsrahmen ein Unicast-Verwaltungsrahmen ist, der an eine der Vielzahl von drahtlosen Multilink-Nicht-AP-Stationen (120) gesendet wird, und wobei die Kommunikationsschnittstelle (113) dazu konfiguriert ist, einen Bestätigungsrahmen als Reaktion auf das Senden des Verwaltungsrahmens an die eine drahtlose Multilink-Nicht-AP-Station (120) von der einen drahtlosen Multilink-Nicht-AP-Station (120) zu empfangen.

4. Drahtloser Multilink-AP (110) nach Anspruch 1 oder 2, wobei der Verwaltungsrahmen ein Broadcast-Verwaltungsrahmen ist und wobei die Verarbeitungsschaltung (111) dazu konfiguriert ist, mindestens den ersten Setup-Link als Reaktion auf das Senden des Verwaltungsrahmens an alle der Vielzahl von drahtlosen Multilink-Nicht-AP-Stationen (120), die auf dem ersten Setup-Link arbeitet, zu deaktivieren.

5. Drahtloser Multilink-AP (110) nach einem der vorhergehenden Ansprüche, wobei die Vielzahl von Rahmen eine Vielzahl von Datenrahmen umfasst und wobei jeder Datenrahmen eine entsprechende Übertragungskennung, TID, umfasst, welcher er aus einer Vielzahl von TIDs entspricht, und wobei die Verarbeitungsschaltung (111) dazu konfiguriert ist, jede TID einem oder mehreren der Vielzahl von Setup-Links zuzuordnen.

6. Verfahren (300), das durch einen drahtlosen Multilink-Zugangspunkt, AP, (110) durchgeführt wird, der dazu konfiguriert ist, eine Vielzahl von Rahmen über eine Vielzahl von Setup-Links mit einer Vielzahl von drahtlosen Multilink-Nicht-AP-Stationen (120) in einem drahtlosen Kommunikationsnetzwerk (100) auszutauschen, wobei das Verfahren (300) Folgendes umfasst:
Senden (301) eines Verwaltungsrahmens an mindestens eine der Vielzahl von drahtlosen Multilink-Nicht-AP-Stationen (120), die auf einem ersten Setup-Link der Vielzahl von Setup-Links arbeitet, wobei der Verwaltungsrahmen Informationen für die mindestens eine der Vielzahl von drahtlosen Multilink-Nicht-AP-Stationen (120) zum Identifizieren von mindestens dem ersten Setup-Link der Vielzahl von Setup-Links umfasst, die zu deaktivieren ist; und
Deaktivieren (303) mindestens des ersten Setup-Links als Reaktion auf das Senden des Verwaltungsrahmens, **dadurch gekennzeichnet, dass** der Verwaltungsrahmen an mindestens eine der Vielzahl von drahtlosen Multilink-Nicht-AP-Stationen (120), die auf dem ersten Setup-Link arbeitet, über den ersten Setup-Link gesendet wird, der durch den drahtlosen Multilink-AP (110) zu deaktivieren ist.

7. Verfahren (300) nach Anspruch 6, wobei der Verwaltungsrahmen ein Broadcast-Verwaltungsrahmen ist und wobei das Deaktivieren (303) mindestens des ersten Setup-Links das sofortige Deaktivieren mindestens des ersten Setup-Links als Reaktion auf das Senden des Broadcast-Verwaltungsrahmens umfasst.

8. Verfahren (300) nach Anspruch 6, wobei der Verwaltungsrahmen ein Unicast-Verwaltungsrahmen ist und wobei das Verfahren (300) ferner das Empfangen eines Bestätigungsrahmens umfasst, wobei das Deaktivieren (303) mindestens des ersten Setup-Links das Deaktivieren mindestens des ersten Setup-Links als Reaktion auf das Senden des Unicast-Verwaltungsrahmens und das Empfangen des Bestätigungsrahmens umfasst.

9. Verfahren (300) nach einem der Ansprüche 6 bis 8, wobei die Vielzahl von Setup-Links mindestens einen deaktivierten Setup-Link umfasst und wobei das Verfahren (300) ferner das Senden eines weiteren Verwaltungsrahmens an mindestens eine der Vielzahl von drahtlosen Multilink-Nicht-AP-Stationen (120) umfasst, wobei der weitere Verwaltungsrahmen Informationen für die mindestens eine der Vielzahl von drahtlosen Multilink-Nicht-AP-Stationen (120) zum Identifizieren des mindestens einen deaktivierten Setup-Links, der zu aktivieren ist, und Aktivieren des mindestens einen deaktivierten Setup-Links als Reaktion auf das Senden des weiteren Verwaltungsrahmens umfasst.

10. Drahtlose Multilink-Nicht-Zugangspunkt-Station, Nicht-AP-Station, (120), die dazu konfiguriert ist, eine Vielzahl von Rahmen über eine Vielzahl von Setup-Links mit einem drahtlosen Multilink-AP (110) in einem drahtlosen Kommunikationsnetzwerk (100) auszutauschen, wobei die drahtlose Multilink-Nicht-AP-Station (120) Folgendes umfasst:
eine Kommunikationsschnittstelle (123), um einen Verwaltungsrahmen von dem drahtlosen Multilink-AP (110) zu empfangen; und
eine Verarbeitungsschaltung (121), die dazu konfiguriert ist, Informationen aus dem Verwaltungsrahmen zum Identifizieren mindestens eines ersten Setup-Links der Vielzahl von Setup-Links zu extrahieren, die zu deaktivieren ist;
wobei die Verarbeitungsschaltung (121) ferner dazu konfiguriert ist, mindestens den ersten Setup-Link zu deaktivieren, **dadurch gekennzeichnet, dass** die Kommunikationsschnittstelle (123) dazu konfiguriert ist, den Verwaltungsrahmen aus dem drahtlosen Multilink-AP (110) über den ersten Setup-Link zu empfangen, der zu deaktivieren ist.

11. Drahtlose Multilink-Nicht-AP-Station (120) nach Anspruch 10, wobei der Verwaltungsrahmen ein Unicast-Rahmen ist und wobei die Kommunikationsschnittstelle (123) ferner dazu konfiguriert ist, einen Bestätigungsrahmen als Reaktion auf das Empfangen des individuell adressierten Unicast-Verwaltungsrahmens aus dem drahtlosen Multilink-AP (110) an den drahtlosen Multilink-AP (110) zu senden.

12. Drahtlose Multilink-Nicht-AP-Station (120) nach Anspruch 10 oder 11, wobei die Vielzahl der Setup-Links mindestens einen deaktivierten Setup-Link umfasst und wobei die Kommunikationsschnittstelle (123) dazu konfiguriert ist, einen weiteren Verwaltungsrahmen aus dem drahtlosen Multilink-AP (110) zu empfangen, wobei die Verarbeitungsschaltung (121) dazu konfiguriert ist, weitere Informationen aus dem weiteren Verwaltungsrahmen zum Identifizieren des mindestens einen deaktivierten Setup-Links zu extrahieren, der zu aktivieren ist, wobei die Verarbeitungsschaltung (121) ferner dazu konfiguriert ist, den mindestens einen deaktivierten Setup-Link zu aktivieren.

13. Drahtlose Multilink-Nicht-AP-Station (120) nach einem der Ansprüche 10 bis 12, wobei die Vielzahl von Rahmen eine Vielzahl von Datenrahmen umfasst und wobei jeder Datenrahmen eine entsprechende Übertragungskennung, TID, einer Vielzahl von TIDs umfasst, und wobei die Verarbeitungsschaltung (121) dazu konfiguriert ist, jede TID einem oder mehreren der Vielzahl von Setup-Links zuzuordnen.

14. Verfahren (400), das durch eine drahtlose Multilink-Nicht-Zugangspunktstation, Nicht-AP-Station, (120) durchgeführt wird, die dazu konfiguriert ist, eine Vielzahl von Rahmen über eine Vielzahl von Setup-Links mit einem drahtlosen Multilink-AP (110) in einem drahtlosen Kommunikationsnetzwerk (100) auszutauschen, wobei das Verfahren (400) Folgendes umfasst:
Empfangen (401) eines Verwaltungsrahmens aus dem drahtlosen Multilink-AP (110);
Extrahieren (403) von Informationen aus dem Verwaltungsrahmen zum Identifizieren mindestens eines ersten Setup-Links der Vielzahl von Setup-Links, die zu deaktivieren ist; und
Deaktivieren (405) mindestens des ersten Setup-Links,
**dadurch gekennzeichnet, dass** der Verwaltungsrahmen aus dem drahtlosen Multilink-AP (110) über den ersten Setup-Link empfangen wird, der zu deaktivieren ist.

15. Verfahren (400) nach Anspruch 14, wobei der Verwaltungsrahmen ein Broadcast-Verwaltungsrahmen ist und wobei das Deaktivieren (405) mindestens des ersten Setup-Links das Deaktivieren mindestens des ersten Setup-Links als Reaktion auf das Empfangen des Broadcast-Verwaltungsrahmens umfasst.

16. Verfahren (400) nach Anspruch 14, wobei der Verwaltungsrahmen ein Unicast-Verwaltungsrahmen ist und wobei das Verfahren (400) ferner das Senden eines Bestätigungsrahmens an den drahtlosen Multilink-AP (110) umfasst, wobei der Schritt des Deaktivierens (405) mindestens des ersten Setup-Links das Deaktivieren mindestens des ersten Setup-Links als Reaktion auf das Empfangen des Unicast-Verwaltungsrahmens und das Senden des Bestätigungsrahmens an den drahtlosen Multilink-AP (110) umfasst.

17. Verfahren (400) nach einem der Ansprüche 14 bis 16, wobei die Vielzahl von Setup-Links mindestens einen deaktivierten Setup-Link umfasst und wobei das Verfahren (400) ferner Folgendes umfasst:
Empfangen eines weiteren Verwaltungsrahmens aus dem drahtlosen Multilink-AP (110);
Extrahieren weiterer Informationen aus dem weiteren Verwaltungsrahmen zum Identifizieren des mindestens einen deaktivierten Setup-Links, der zu aktivieren ist; und
Aktivieren des mindestens einen deaktivierten Setup-Links.

18. Computerprogrammprodukt, umfassend ein computerlesbares Speichermedium zum Speichern von Programmcode, welcher bei Ausführung durch einen Computer oder einen Prozessor eines drahtlosen Multilink-Zugangspunkts bewirkt, dass der drahtlose Multilink-Zugangspunkt das Verfahren (300) nach einem der Ansprüche 6 bis 9 durchführt, oder bei Ausführung durch einen Computer oder einen Prozessor eines drahtlosen Multilink-Nicht-Zugangspunkts bewirkt, dass der drahtlose Multilink-Nicht-Zugangspunkt das Verfahren (400) nach einem der Ansprüche 14 bis 17 durchführt.

## Revendications

1. Point d'accès, AP, sans fils multi-liaisons, (110) configuré pour échanger une pluralité de trames via une pluralité de liaisons d'établissement avec une pluralité de stations sans fils multi-liaisons non AP (120) dans un réseau de communication sans fils (100), dans lequel l'AP sans fils multi-liaisons (110) comprend :
une interface de communication (113) configurée pour envoyer une trame de gestion à au moins l'une de la pluralité de stations sans fils multi-liaisons non AP (120) fonctionnant sur une première liaison d'établissement de la pluralité de liaisons d'établissement, dans lequel la trame de gestion comprend des informations pour l'au moins une de la pluralité de stations sans fils multi-liaisons non AP (120) pour identifier au moins la première liaison d'établissement de la pluralité de liaisons d'établissement à désactiver ; et
un circuit de traitement (111) configuré pour, en réponse à l'envoi de la trame de gestion, désactiver au moins la première liaison d'établissement,
**caractérisé en ce que** l'interface de communication (113) est configurée pour envoyer la trame de gestion à l'au moins une de la pluralité de stations sans fils multi-liaisons non AP (120) fonctionnant sur la première liaison d'établissement via la première liaison d'établissement à désactiver par l'AP sans fils multi-liaisons (110).

2. AP sans fils multi-liaisons (110) selon la revendication 1, dans lequel la pluralité de liaisons d'établissement comprennent au moins une liaison d'établissement désactivée et dans lequel l'interface de communication (113) est également configurée pour envoyer une autre trame de gestion à au moins l'une de la pluralité de stations sans fils multi-liaisons non AP (120), dans lequel l'autre trame de gestion comprend des informations pour l'au moins une de la pluralité de stations sans fils multi-liaisons non AP (120) pour identifier l'au moins une liaison d'établissement désactivée à activer, et dans lequel le circuit de traitement (111) est également configuré, en réponse à l'envoi de l'autre trame de gestion, pour activer l'au moins une liaison d'établissement désactivée.

3. AP sans fils multi-liaisons (110) selon la revendication 1 ou 2, dans lequel la trame de gestion est une trame de gestion de monodiffusion envoyée à l'une de la pluralité de stations sans fils multi-liaisons non AP (120) et dans lequel l'interface de communication (113) est configurée pour recevoir une trame d'accusé de réception de la station sans fils multi-liaisons non AP (120), en réponse à l'envoi de la trame de gestion à l'une station sans fils multi-liaisons non AP (120).

4. AP sans fils multi-liaisons (110) selon la revendication 1 ou 2, dans lequel la trame de gestion est une trame de gestion de diffusion et dans lequel le circuit de traitement (111) est configuré pour désactiver au moins la première liaison d'établissement, en réponse à l'envoi de la trame de gestion à l'ensemble de la pluralité de stations sans fils multi-liaisons non AP (120) fonctionnant sur la première liaison d'établissement.

5. AP sans fils multi-liaisons (110) selon l'une quelconque des revendications précédentes, dans lequel la pluralité de trames comprend une pluralité de trames de données et dans lequel chaque trame de données comprend un identifiant de transmission correspondant, TID, auquel elle correspond d'une pluralité de TID et dans lequel le circuit de traitement (111) est configuré pour mapper chaque TID à l'une ou plusieurs de la pluralité de liaisons d'établissement.

6. Procédé (300) réalisé par un point d'accès, AP, sans fils multi-liaisons, (110) configuré pour échanger une pluralité de trames via une pluralité de liaisons d'établissement avec une pluralité de stations sans fils multi-liaisons non AP (120) dans un réseau de communication sans fils (100), dans lequel le procédé (300) comprend :
l'envoi (301) d'une trame de gestion à au moins l'une de la pluralité de stations sans fils multi-liaisons non AP (120) fonctionnant sur une première liaison d'établissement de la pluralité de liaisons d'établissement, dans lequel la trame de gestion comprend des informations pour l'au moins une de la pluralité de stations sans fils multi-liaisons non AP (120) pour identifier au moins la première liaison d'établissement de la pluralité de liaisons d'établissement à désactiver ; et
en réponse à l'envoi de la trame de gestion, la désactivation (303) d'au moins la première liaison d'établissement, **caractérisé en ce que** la trame de gestion est envoyée à l'au moins une de la pluralité de stations sans fils multi-liaisons non AP (120) fonctionnant sur la première liaison d'établissement via la première liaison d'établissement à désactiver par l'AP sans fils multi-liaisons (110).

7. Procédé (300) selon la revendication 6, dans lequel la trame de gestion est une trame de gestion de diffusion et dans lequel la désactivation (303) d'au moins la première liaison d'établissement comprend la désactivation immédiate d'au moins la première liaison d'établissement, en réponse à l'envoi de la trame de gestion de diffusion.

8. Procédé (300) selon la revendication 6, dans lequel la trame de gestion est une trame de gestion de monodiffusion et dans lequel le procédé (300) comprend également la réception d'une trame d'accusé de réception, dans lequel la désactivation (303) d'au moins la première liaison d'établissement comprend la désactivation d'au moins la première liaison d'établissement, en réponse à l'envoi de la trame de gestion de monodiffusion et à la réception de la trame d'accusé de réception.

9. Procédé (300) selon l'une quelconque des revendications 6 à 8, dans lequel la pluralité de liaisons d'établissement comprennent au moins une liaison d'établissement désactivée et dans lequel le procédé (300) comprend également l'envoi d'une autre trame de gestion à au moins l'une de la pluralité de stations sans fils multi-liaisons non AP (120), dans lequel l'autre trame de gestion comprend des informations pour l'au moins une de la pluralité de stations sans fils multi-liaisons non AP (120) pour identifier l'au moins une liaison d'établissement désactivée à activer, et activer l'au moins une liaison d'établissement désactivée, en réponse à l'envoi de l'autre trame de gestion.

10. Station sans fils multi-liaisons non point d'accès, non AP, (120) configurée pour échanger une pluralité de trames via une pluralité de liaisons d'établissement avec une AP sans fils multi-liaisons (110) dans un réseau de communication sans fils (100), dans laquelle la station sans fils multi-liaisons non AP (120) comprend :
une interface de communication (123) pour recevoir une trame de gestion de l'AP sans fils multi-liaisons (110) ; et
un circuit de traitement (121) configuré pour extraire des informations de la trame de gestion pour identifier au moins une première liaison d'établissement de la pluralité de liaisons d'établissement à désactiver ;
dans laquelle le circuit de traitement (121) est également configuré pour désactiver au moins la première liaison d'établissement, **caractérisée en ce que** l'interface de communication (123) est configurée pour recevoir la trame de gestion de l'AP sans fils multi-liaisons (110) via la première liaison d'établissement à désactiver.

11. Station sans fils multi-liaisons non AP (120) selon la revendication 10, dans laquelle la trame de gestion est une trame de monodiffusion et dans laquelle l'interface de communication (123) est également configurée pour envoyer, en réponse à la réception de la trame de gestion de monodiffusion adressée individuellement de l'AP sans fils multi-liaisons (110), une trame d'accusé de réception à l'AP sans fils multi-liaisons (110).

12. Station sans fils multi-liaisons non AP (120) selon la revendication 10 ou 11, dans laquelle la pluralité de liaisons d'établissement comprennent au moins une liaison d'établissement désactivée et dans laquelle l'interface de communication (123) est configurée pour recevoir une autre trame de gestion de l'AP sans fils multi-liaisons (110), dans laquelle le circuit de traitement (121) est configuré pour extraire d'autres informations de l'autre trame de gestion pour identifier l'au moins une liaison d'établissement désactivée à activer, dans laquelle le circuit de traitement (121) est également configuré pour activer l'au moins une liaison d'établissement désactivée.

13. Station sans fils multi-liaisons non AP (120) selon l'une quelconque des revendications 10 à 12, dans laquelle la pluralité de trames comprennent une pluralité de trames de données et dans laquelle chaque trame de données comprend un identifiant de transmission, TID, correspondant d'une pluralité de TID et dans laquelle le circuit de traitement (121) est configuré pour mapper chaque TID à l'une ou plusieurs de la pluralité de liaisons d'établissement.

14. Procédé (400) réalisé par une station sans fils multi-liaisons non point d'accès, non AP, (120) configurée pour échanger une pluralité de trames via une pluralité de liaisons d'établissement avec un AP sans fils multi-liaisons (110) dans un réseau de communication sans fils (100), dans lequel le procédé (400) comprend :
la réception (401) d'une trame de gestion à de l'AP sans fils multi-liaisons (110) ;
l'extraction (403) d'informations de la trame de gestion pour identifier au moins une première liaison d'établissement de la pluralité de liaisons d'établissement à désactiver ; et
la désactivation (405) d'au moins la première liaison d'établissement,
**caractérisé en ce que** la trame de gestion est reçue de l'AP sans fils multi-liaisons (110) via la première liaison d'établissement à désactiver.

15. Procédé (400) selon la revendication 14, dans lequel la trame de gestion est une trame de gestion de diffusion et dans lequel la désactivation (405) d'au moins la première liaison d'établissement comprend la désactivation d'au moins la première liaison d'établissement, en réponse à la réception de la trame de gestion de diffusion.

16. Procédé (400) selon la revendication 14, dans lequel la trame de gestion est une trame de gestion de monodiffusion et dans lequel le procédé (400) comprend également l'envoi d'une trame d'accusé de réception à l'AP sans fils multi-liaisons (110), dans lequel l'étape de désactivation (405) d'au moins la première liaison d'établissement comprend la désactivation d'au moins la première liaison d'établissement, en réponse à la réception de la trame de gestion de monodiffusion et l'envoi de la trame d'accusé de réception à l'AP sans fils multi-liaisons (110) .

17. Procédé (400) selon l'une quelconque des revendications 14 à 16, dans lequel la pluralité de liaisons d'établissement comprennent au moins une liaison d'établissement désactivée et dans lequel le procédé (400) comprend également :
la réception d'une autre trame de gestion de l'AP sans fils multi-liaisons (110) ;
l'extraction d'autres informations de l'autre trame de gestion pour identifier l'au moins une liaison d'établissement désactivée à activer ; et
l'activation de l'au moins une liaison d'établissement désactivée.

18. Produit de programme informatique comprenant un support de stockage lisible par ordinateur pour stocker un code de programme qui, lorsqu'il est exécuté par un ordinateur ou un processeur d'un point d'accès sans fils multi-liaisons, amène le point d'accès sans fils multi-liaisons à réaliser le procédé (300) selon l'une quelconque des revendications 6 à 9 ou, lorsqu'il est exécuté par un ordinateur ou un processeur d'un non point d'accès sans fils multi-liaisons, amène le non point d'accès sans fils multi-liaisons à réaliser le procédé (400) selon l'une quelconque des revendications 14 à 17.
